# EUROPEAN PATENT APPLICATION

(11) **EP 3 848 248 A1**
(43) Date of publication of application: **14.07.2021**
(21) Application number: 20151067.4
(22) Date of filing: 09.01.2020
(51) Int. Cl.: B60R 13/04, F16B 5/12

(54) **VEHICLE COMPONENT MOUNTABLE OR MOUNTED TO A VEHICLE, VEHICLE COMPONENT ARRANGEMENT, VEHICLE COMPRISING SUCH A VEHICLE COMPONENT OR SUCH A VEHICLE COMPONENT ARRANGEMENT AND METHOD FOR MOUNTING SUCH A VEHICLE COMPONENT ARRANGEMENT**

(71) Applicant: Motherson Innovations Company Limited, London, Greater London EC3A 6AP (GB)
(72) Inventor: Baumer, Pascal, 79235 Vogtsburg (DE)
(74) Representative: Westphal, Mussgnug & Partner Patentanwälte mbB

(57) **Abstract**

The present disclosure relates to a vehicle component (12) mountable or mounted to a vehicle (50), the vehicle component (12) comprising a base body (18), the base body (18) having positioning means (20) by which a first connecting part (14) and a second connecting part (16) can be positioned relative to the base body (18) when the first connecting part (14) or the second connecting part (16) is mounted to the vehicle (50), the positioning means (20) comprising first positioning sections (22) contacting the first connecting part (14) when the first connecting part (14) is mounted to the vehicle (50), and second positioning sections (24) contacting the second connecting part (16) when the second connecting part (16) is mounted to the vehicle (50). Moreover, the present disclosure is directed to a vehicle component arrangement (10), a vehicle (50) comprising such a vehicle component (12) or such a vehicle component arrangement (10) and to a method for mounting such a vehicle component arrangement (10).

## Description

The present disclosure relates to a vehicle component mountable or mounted to a vehicle. Moreover, the present disclosure is directed to a vehicle component arrangement, a vehicle comprising such a vehicle component or such a vehicle component arrangement and to a method for mounting such a vehicle component arrangement.

Vehicles are composed of a plurality of vehicle components that are interacting with each other to ensure the proper function of the vehicle. The interacting vehicle components are fastened to a support structure such as the chassis or the like. In some cases the interaction does not only depend on the fastening but also on the position of one component relative to another component. As an example the vehicle door will not properly close if not exactly positioned relative to the door cutout of the car body. Next to the function an exact positioning of one part relative to another part has a significant impact on the quality impression of a given vehicle. A homogenous and small joint gap is considered as a high quality feature which is in particular true for exterior trim parts such as bumpers. In particular the front bumper often comprises a plurality of connecting parts such as a front grille. To ensure the high quality impression the front grille has to be exactly positioned relative to the remaining front bumper. Depending on the vehicle model several versions of the front grille may be fastened to the front bumper. As an example a first version of the front grille may be fastened to the front bumper in case the vehicle is ordered in a business version. In case a sports version is ordered a second version of the front grille may fastened to the front bumper. The front bumper as such remains unchanged whereas the different versions may differ in their dimensions. The positioning is usually conducted by a positioning section provided by the vehicle component such as the bumper, which contacts the first connecting part, in this case the first version of the grille, or contacts the second connecting part, in this case the second version of the grille.

In case the first connecting part is modified such that the positioning section needs to be adjusted this adjustment also influences the positioning of the second connecting part and vice versa. In many cases the modification of the first connecting part also entails the modification of the second connecting part.

DE 102 085 05 B4 discloses a connecting member for connecting a first member with a second part wherein the dimensions of the connecting member are changed such that the distance between the first part and the second part are adjustably interchangeable. EP 2 030 847 B1 discloses a bumper substructure arranged at a vehicle body spaced at a distance from a mask element and masked by the mask element.

It is one task of one embodiment of the present disclosure to present a vehicle component and a vehicle component arrangement which enable the positioning of at least a first connecting part or a second connecting part relative to the vehicle component in such a way that modifications of the first connecting part does not require the modification of the second connecting part and vice versa.

Furthermore, an embodiment of the present disclosure has the objective to provide a vehicle comprising such vehicle component or such a vehicle component arrangement. Beyond that it is one object of the present disclosure to present a method for mounting such vehicle component or such a vehicle component arrangement.

According to one embodiment of the present disclosure a vehicle component mountable or mounted to a vehicle, comprises a base body, the base body having
- positioning means by which a first connecting part and a second connecting part can be positioned relative to the base body when the first connecting part or the second connecting part is mounted to the vehicle,
- the positioning means comprising
   ∘ first positioning sections contacting the first connecting part when the first connecting part is mounted to the vehicle, and
   ∘ second positioning sections contacting the second connecting part when the second connecting part is mounted to the vehicle.

The base body of the vehicle component according to the present disclosure is provided with positioning means which comprise a number of first positioning sections and a number of second positioning sections that are arranged at distance from each other. In case a first connecting part is connected to the vehicle component the first connecting part is positioned relative to the vehicle component by contacting the first positioning sections. In case a second connecting part is connected to the vehicle component the second connecting part is positioned relative to the vehicle component by contacting the second positioning sections. In other words the first connecting sections interact with the first connecting part only and the second connecting sections interact with the second connecting part only. In case of modifications of the first connecting part only the first positioning sections have to be adjusted to ensure the desired positioning relative to the vehicle component. The second positioning sections can remain unchanged. The modification of the first connecting part does not entail modifications of the second connecting part and vice versa. Furthermore the adjustment between the vehicle component and the first and second connecting part can be done in the vehicle component alone. Hereby costs can be saved in case the first and the second connecting parts are purchased parts from suppliers, but the vehicle component is an in-house product. The flexibility of the vehicle component with regard to modifications is significantly increased.

Moreover, it is sufficient to provide the first positioning sections and the second positioning sections with a high tolerance level. The remaining surfaces of the vehicle component may be provided with lower tolerance levels. The manufacturing costs can be kept low without deteriorating the precision of the positioning.

In a further embodiment the first positioning sections are embodied as first elevations and/or the second positioning sections are embodied as second elevations. In case of modifications of the first connecting part or the second connecting part only the respective first or second elevations have to be adjusted accordingly which is a fairly easy process.

According to one embodiment the first positioning sections are embodied as first indentations and/or the second positioning sections are embodied as second indentations. Also in this case the adjustment of the first or second elevation is a fairly easy process.

In a further embodiment the first positioning section comprises a first fastening section and/or the second positioning section comprises a second fastening section. As mentioned above the first and the second positioning sections serve for positioning the first and the second connecting parts, respectively, to the vehicle component. Once positioned as requested they may be fastened to the vehicle component or to a support structure of the vehicle by individual and separate fastening means. In this embodiment the first position sections and the second positioning sections are also provided with a fastening function. The first positioning sections and the second positioning sections may be embodied as screw bosses. Separate fastening sections can be omitted, thereby decreasing the complexity of the vehicle component and the first and the second connecting parts.

In accordance with another embodiment the vehicle component is an exterior trim part. As mentioned the exact positioning of the first and the second connecting part with respect to an exterior trim part such as the front bumper are very important for the quality impression of a given vehicle.

A realization of the present disclosure is directed to a vehicle component arrangement, comprising
- a vehicle component according to one of the preceding claims and mounted on the vehicle, and
   ∘ a first connecting part mounted on the vehicle and contacting the first positioning sections of the vehicle component, or
   ∘ a second connecting part mounted on the vehicle and contacting the second positioning sections of the vehicle component.

The technical effects and advantages as discussed with regard to the present interior trim part equally apply to the vehicle. Briefly, the modification of the first connecting part does not entail modifications of the second connecting part and vice versa. Furthermore, it is sufficient to provide the first positioning sections and the second positioning sections with a high tolerance level. The remaining surfaces of the vehicle component may be provided with lower tolerance levels. The manufacturing costs can be kept low without deteriorating the precision of the positioning.

According to an embodiment of the vehicle component arrangement the first connecting part comprises first positioning counter-sections by which the first connecting part contacts the first positioning sections, and the second connecting part comprises second positioning counter-sections by which the second connecting part contacts the second positioning sections.

The first positioning counter-sections contact the first positioning sections and the second positioning sections contact the second positioning counter-sections. To ensure the requested positioning of the first connecting part or the second connecting part relative to the vehicle component it is sufficient to provide the first positioning counter-sections and the second positioning counter-sections with a high tolerance level. The remaining first connecting part and the remaining second connecting part may be provided with lower tolerance levels thereby keeping the manufacturing costs low.

In a further embodiment the first positioning counter-sections are embodied as first counter-elevations and/or the second positioning counter-sections are embodied as second counter-elevations. The manufacture of counter-elevations is fairly simple. In case the counter-elevations interact with indentations of the vehicle component a two- or three-dimensional positioning can be realized.

According to one embodiment the first positioning counter-sections are embodied as first counter-indentations and/or the second positioning counter-sections are embodied as second counter indentations. The manufacture of counter-indentations is fairly simple. In case the counter-indentations interact with elevations of the vehicle component a two- or three-dimensional positioning can be realized.

In a further embodiment the vehicle component, the first connecting part and/or the second connecting part are injection molded. Injection molding enables the production of a high number of the vehicle components and the first and second connecting parts within a short time at acceptable cost.

Another example of the disclosure is directed to a vehicle, comprising
- a vehicle component according to one of the embodiments explained above mounted to the vehicle or
- a vehicle component arrangement according to one of the embodiments previously described.

The technical effects and advantages as discussed with regard to the present interior trim part equally apply to the vehicle. Briefly, the modification of the first connecting part does not entail modifications of the second connecting part and vice versa. Furthermore, it is sufficient to provide the first positioning sections and the second positioning sections with a high tolerance level. The remaining surfaces of the vehicle component may be provided with lower tolerance levels. The manufacturing costs of the vehicle can be kept low without deteriorating the precision of the positioning.

Another implementation of the disclosure is directed to a method for mounting a vehicle component arrangement according to one of the embodiments previously mentioned, comprising the following steps:
- mounting a vehicle component on a vehicle, and
   ∘ mounting a first connecting part on the vehicle such that the first connecting part contacts the first positioning section, or
   ∘ mounting a second connecting part on the vehicle such that the second connecting part contacts the second positioning section.

The technical effects and advantages as discussed with regard to the present interior trim part equally apply to the vehicle. Briefly, the modification of the first connecting part does not entail modifications of the second connecting part and vice versa.

The present disclosure is described in detail with reference to the drawings attached wherein
- Figure 1: is a principle sketch showing a vehicle component arrangement according to a first embodiment of the present disclosure,
- Figures 2A to 2C: show a second embodiment of a vehicle component arrangement according to the present disclosure, by means of different views,
- Figures 3A to 3D: show a third embodiment of a vehicle component arrangement according to the present disclosure, by means of different views,
- Figure 4A: is a principle side view of a vehicle comprising a vehicle component to which a first connecting part is fastened, and

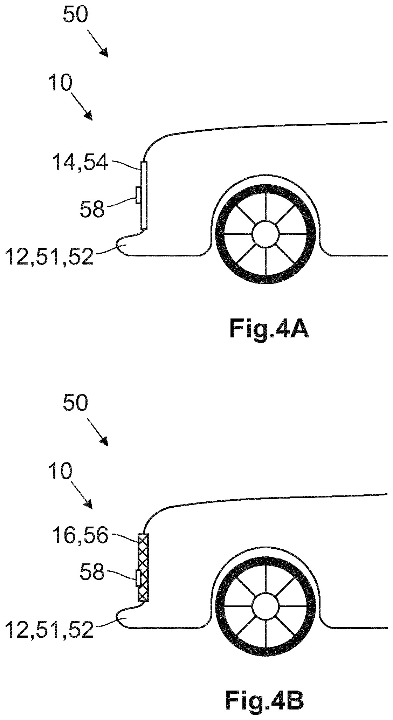

- Figure 4A: the vehicle of Figure 4A comprising a vehicle component to which a second connecting part is fastened.

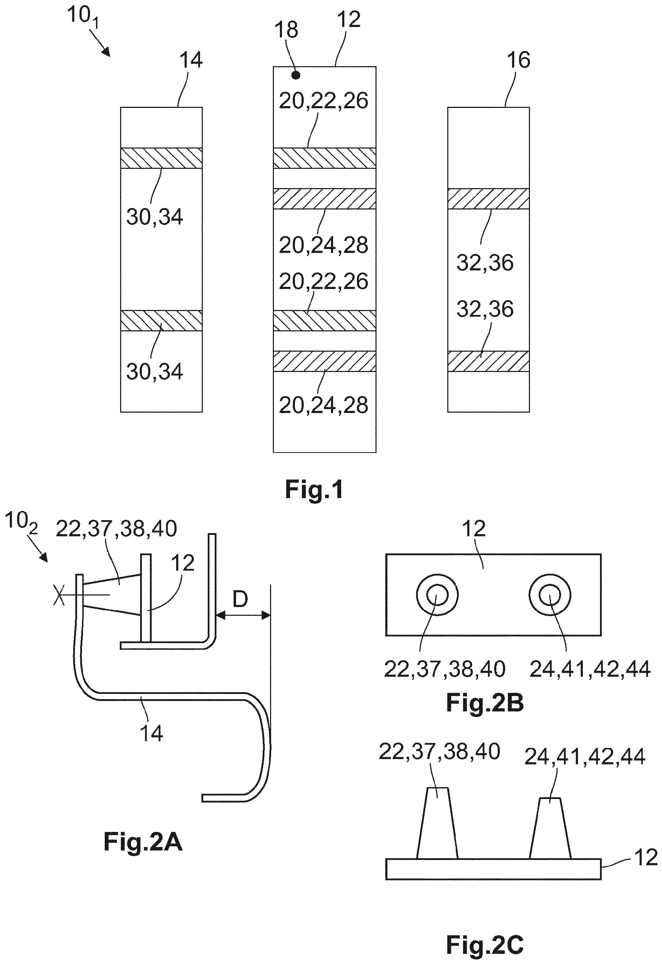

Figure 1 shows a principle sketch of a vehicle component arrangement 10₁ according to a first embodiment of the present disclosure. The vehicle component arrangement 10₁ comprises a vehicle component 12, a first connecting part 14 or a second connecting part 16. Either the first connecting part 14 or the second connecting part 16 can be positioned relative to the vehicle component 12.

The vehicle component 12 has a base body 18 that is provided with positioning means 20 by which the first connecting part 14 and the second connecting part 16 can be positioned relative to the base body 18 when the first connecting part 14 or the second connecting part 16 is mounted to a vehicle 50 (see Figures 4A and 4B). The positioning means 20 comprise in total two first positioning sections 22 contacting the first connecting part 14 when the first connecting part 14 is mounted to the vehicle 50. The positioning means 20 further comprise in total two second positioning sections 24 contacting the second connecting part 16 when the second connecting part 16 is mounted to the vehicle 50.

In the first embodiment of the vehicle component arrangement 10₁ the first positioning sections 22 are embodied as first indentations 26 and the second positioning sections 24 are embodied as second indentations 28.

The first connecting part 14 comprises in total two first positioning counter-sections 30 by which the first connecting part 14 contacts the first positioning sections 22. The second connecting part 16 comprises second positioning counter-sections 32 by which the second connecting part 16 contacts the second positioning sections 24. The first positioning counter-sections 30 are embodied as first counter-elevations 34 and the second positioning counter-sections 32 are embodied as second counter-elevations 36.

As mentioned either the first connecting part 14 or the second connecting part 16 may be positioned relative to the vehicle component 12. The positioning of the first connecting part 14 relative to the vehicle component 12 is conducted in that the first counter-elevations 34 are brought into contact with the first indentations 26 of the vehicle component 12. Likewise, the positioning of the second connecting part 16 relative to the vehicle component 12 is conducted in that the second counter-elevations 36 are brought into contact with the second indentations 28 of the vehicle component 12.

From the above it is evident that when the first connecting part 14 is positioned relative to the vehicle component 12 the first positioning sections 22 and the first positioning counter-sections 30 are in contact with each other. The second positioning sections 24 are not involved in the positioning of the first connecting part 14 relative to the vehicle component 12. Accordingly, when the second connecting part 16 is positioned relative to the vehicle component 12 the second positioning sections 24 and the second positioning counter-sections 32 are in contact with each other. The first positioning sections 22 are not involved in the positioning of the second connecting part 16 relative to the vehicle component 12. In case the first connecting part 14 is modified and thus the first positioning sections 22 and/or the first positioning counter-sections 30 need to be adjusted to ensure the requested positioning, the second positioning sections 24 and the second positioning counter- sections 32 remain unchanged. This also applies to the reverse case.

It is noted that in the first embodiment of the vehicle component arrangement 10₁ the first positioning sections 22, the first positioning counter-sections 30, the second positioning sections 24 and the second positioning counter-sections 32 only serve for positioning the first connecting part 14 or the second connecting part 16 relative to the vehicle component 12. They do not serve for fastening the first connecting part 14 or the second connecting part 16 to the vehicle component 12.

Not explicitly shown is an embodiment of the vehicle component arrangement 10₁ in which the first positioning section 22 is embodied as a first elevation 37 and the second positioning section 24 as a second elevation 41, wherein the first positioning counter-sections 30 are embodied as first counter-indentations and the second positioning counter-sections 32 as second counter-indentations.

Figures 2A to 2C show a second embodiment of a vehicle component arrangement 10i according to the present disclosure by means of different views. In Figure 2A a first connecting part 14 is positioned to the vehicle component 12. In this embodiment the first positioning section 22 is embodied as a first elevation 37 and comprises a first fastening section 38 such that the first connecting part 14 can not only be positioned relative to the vehicle component 12 but also fastened hereto. To this end the first positioning section 22 is embodied as a first screw boss 40.

As shown in Figures 2B and 2C the second positioning section 24 is embodied as a second elevation 41 and also comprises a second fastening section 42 such that a second connecting part 16 (not shown) may be positioned and fastened to the vehicle component 12. Also in this case the second positioning section 24 is embodied as a second screw boss 44. As particularly evident from Figure 2C the first screw boss 40 has a larger height than the second screw boss 44. As shown in Figure 2A the first connecting part 14 is fastened and positioned relative to the vehicle component 12 in a distance D. The second connecting part 16 can be fastened and positioned relative to the vehicle component 12 in the same distance D although the second connecting part 16 (not shown) has a different width than the first connecting part 14.

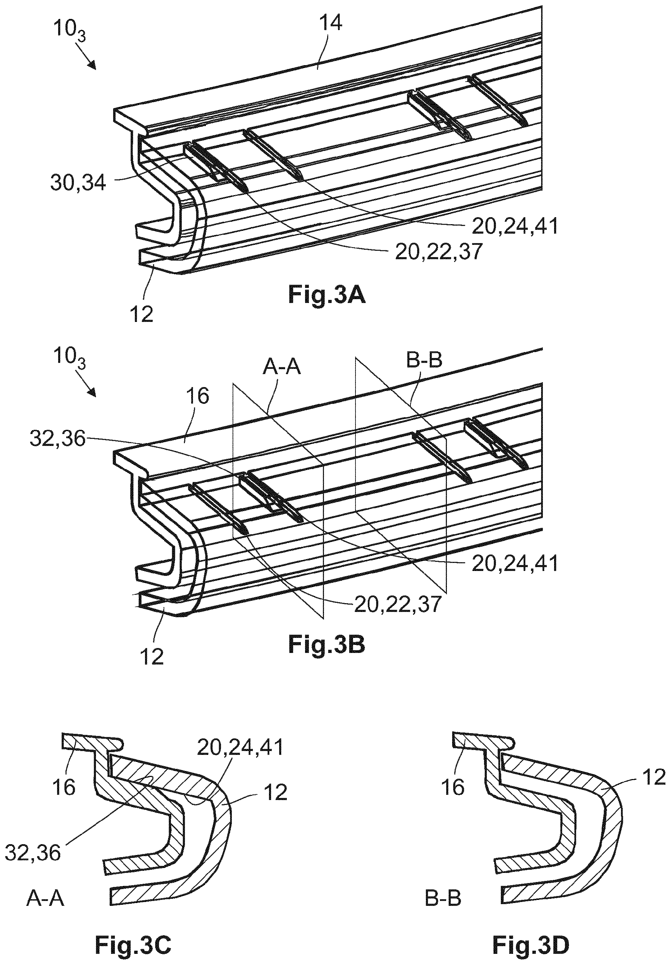

In Figures 3A to 3D a third embodiment of the vehicle component arrangement 10₃ according to the present disclosure is shown. In Figure 3A a first connecting part 14 is connected to the vehicle component 12 whereas in Figure 3B a second connecting part 16 is connected to the vehicle component 12. As evident from Figure 3A the first positioning sections 22 of the vehicle component 12 are contacting the first positioning counter-sections 30 of the first connecting part 14. In Figure 3B the second positioning sections 24 of the vehicle component 12 are contacting the second positioning counter-sections 32 of the second connecting part 16.

Figure 3C is a cross section through the vehicle component 12 and the second connecting part 16 along the plane A-A as defined in Figure 3B. Figure 3D is a cross section through the vehicle component 12 and the second connecting part 16 along the plane B-B as defined in Figure 3B.

The cross section along the plane A-A as shown in Figure 3C is running through one of the second positioning sections 24 and through one of the second positioning counter-sections 32. One can see that the second positioning sections 24 are embodied as second elevations 41 and the second positioning counter-sections 32 are embodied as second counter-elevations 36. The second elevations 41 and the second counter-elevations 36 are formed as ribs.

The cross section along the plane B-B as shown in Figure 3D is neither running through the first positioning sections 22 or second positioning sections 24 nor through the second positioning counter-sections 32. One can see that in the plane B-B the vehicle component 12 and the second connecting part 16 do not contact each other. The same is true in a plane running through the first positioning sections 22 (not shown) in case the second connecting part 16 is positioned relative to the vehicle component 12.

Figure 4A shows a vehicle 50 comprising a vehicle component arrangement 10 according to one of the embodiments shown in Figures 1 to 3D. The vehicle component 12 is embodied as an exterior trim part 51, in this case a bumper 52 to which a first connecting part 14 is fastened, in this case a first grille 54.

Figure 4B shows the same type of vehicle 50 also comprising a vehicle component 12 according to one of the embodiments shown in Figure 1 to 3D. Also in Figure 4B the vehicle component 12 is a bumper 52 to which a second connecting part 16 is fastened, in this case a second grille 56. The first grille 54 and the second grille 56 are slightly different which is symbolized by the crosshatching of the second grille 56. A number plate 58 may be fastened to the first grille 54 or the second grille 56. The position of the number plate 58 relative to the first grille 54 is different compared to the second grille 56. In spite of the differences of the first grille 54 and the second grille 56 they can be fastened to the bumper 52 without any adjustments. In case the first grille 54 is modified this modification does not entail a modification of the second grille 56.

The grille 54, 56 as such may also constitute the vehicle component 12 to which different grille grids may be fastened (not shown). The first version of the grids may constitute the first connecting part 14 whereas the second version of the grids may be the second connecting part 16. One first connecting part 14 or one second connecting part 16 as such may not be one part but could be bipartite or a multi-component part.

Moreover, in the disclosure first and second connecting part 16s were mentioned that can be positioned relative to the vehicle component 12. However, a third, fourth and further connecting part may be positioned relative to the vehicle component 12 by means of a third, fourth or further positioning section.

### Reference list

- 10: vehicle component arrangement
- 10₁ -: 10₃ vehicle component arrangement
- 12: vehicle component
- 14: first connecting part
- 16: second connecting part
- 18: base body
- 20: positioning means
- 22: first positioning section
- 24: second positioning section
- 26: first indentations
- 28: second indentations
- 30: first positioning counter-section
- 32: second positioning counter-section
- 34: first counter-elevation
- 36: second counter-elevation
- 37: first elevation
- 38: first fastening section
- 40: first screw boss
- 41: second elevation
- 42: second fastening section
- 44: second screw boss
- 50: vehicle
- 51: exterior trim part
- 52: bumper
- 54: first grille
- 56: second grille
- 58: number plate

- D: distance

## Claims

1. Vehicle component (12) mountable or mounted to a vehicle (50), the vehicle component (12) comprising a base body (18), the base body (18) having
- positioning means (20) by which a first connecting part (14) and a second connecting part (16) can be positioned relative to the base body (18) when the first connecting part (14) or the second connecting part (16) is mounted to the vehicle (50),
- the positioning means (20) comprising
∘ first positioning sections (22) contacting the first connecting part (14) when the first connecting part (14) is mounted to the vehicle (50), and
∘ second positioning sections (24) contacting the second connecting part (16) when the second connecting part (16) is mounted to the vehicle (50).

2. Vehicle component (12) according to claim 1,
**characterized in that** the first positioning sections (22) are embodied as first elevations (37) and/or the second positioning sections (24) are embodied as second elevations (41) .

3. Vehicle component (12) according to claim 1,
**characterized in that** the first positioning sections (22) are embodied as first indentations (26) and/or the second positioning sections (24) are embodied as second indentations (28).

4. Vehicle component (12) according to one of the preceding claims,
**characterized in that**
- the first positioning section (22) comprises a first fastening section (38) and/or
- the second positioning section (24) comprises a second fastening section (42).

5. Vehicle component (12) according to one of the preceding claims,
**characterized in that** the vehicle component (12) is an exterior trim part (51).

6. Vehicle component arrangement (10), comprising
- a vehicle component (12) according to one of the preceding claims and mounted on the vehicle (50), and
∘ a first connecting part (14) mounted on the vehicle (50) and contacting the first positioning sections (22) of the vehicle component (12), or
∘ a second connecting part (16) mounted on the vehicle (50) and contacting the second positioning sections (24) of the vehicle component (12).

7. Vehicle component arrangement (10) according to claim 6,
**characterized in that**
- the first connecting part (14) comprises first positioning counter-sections (30) by which the first connecting part (14) contacts the first positioning sections (22), and
- the second connecting part (16) comprises second positioning counter-sections (32) by which the second connecting part (16) contacts the second positioning sections (24).

8. Vehicle component arrangement (10) according to claim 7,
**characterized in that**
- the first positioning counter-sections (30) are embodied as first counter-elevations (34) and/or
- the second positioning counter-sections (32) are embodied as second counter-elevations (36).

9. Vehicle component (12) according to claim 7,
**characterized in that** the first positioning counter-sections (30) are embodied as first counter-indentations and/or the second positioning counter-sections (32) are embodied as second counter-indentations.

10. Vehicle component (12) according to one of the claims 6 to 9,
**characterized in that** the vehicle component (12), the first connecting part (14) and/or the second connecting part (16) are injection molded.

11. Vehicle, comprising
- a vehicle component (12) according to one of the claims 1 to 5 mounted to the vehicle (50) or
- a vehicle component arrangement (10) according to one of the claims 6 to 10.

12. Method for mounting a vehicle component arrangement (10) according to one of the claims 6 to 10, comprising the following steps:
- mounting a vehicle component (12) on a vehicle (50), and
∘ mounting a first connecting part (14) on the vehicle (50) such that the first connecting part (14) contacts the first positioning section (22), or
∘ mounting a second connecting part (16) on the vehicle (50) such that the second connecting part (16) contacts the second positioning section (24).
